# EUROPÄISCHE PATENTSCHRIFT

(11) **EP 3 596 178 B1**
(45) Veröffentlichungstag und Bekanntmachung des Hinweises auf die Patenterteilung: **27.01.2021**
(21) Anmeldenummer: 18708149.2
(22) Anmeldetag: 08.03.2018
(51) Int. Cl.: C09D 163/00, C08G 59/50, C08G 59/40, C04B 26/14, C04B 28/04, C04B 111/60, C04B 111/00

(54) **EPOXIDHARZ-VERGÜTETE ZUSAMMENSETZUNG ALS BESCHICHTUNG ODER VERSIEGELUNG**
EPOXY RESIN HARDENED COMPOSITIONS IN THE FORM OF A COATING OR SEAL
COMPOSITION TRAITÉE À LA RÉSINE ÉPOXY COMME REVÊTEMENT OU SCELLEMENT

(30) Priorität: 13.03.2017 EP 17160580
(43) Veröffentlichungstag der Anmeldung: 22.01.2020
(73) Patentinhaber: Sika Technology AG, 6340 Baar (CH)
(72) Erfinder: TEICHERT, David, 71640 Ludwigsburg (DE); CONRAD, Lars, 74321 Bietigheim-Bissingen (DE); GRÖTZINGER, Jochen, 73525 Schwäbisch Gmünd (DE)
(74) Vertreter: Sika Patent Attorneys
(86) Internationale Anmeldenummer: PCT/EP2018/055831
(87) Internationale Veröffentlichungsnummer: WO 2018/166897

(56) Entgegenhaltungen:
- EP-A1- 2 133 378
- EP-A1- 2 826 761
- WO-A1-2009/150212
- US-A- 4 980 398

## Beschreibung

### Technisches Gebiet

Die Erfindung betrifft eine mehrkomponentige Zusammensetzung, ein Verfahren zur Herstellung einer Beschichtung mit der mehrkomponentigen Zusammensetzung und die Verwendung der mehrkomponentigen Zusammensetzung als Mörtel, Versiegelung oder Beschichtung.

### Stand der Technik

Für Fußbodenbeschichtungssysteme gibt es ein teilweise vielfältiges Anforderungsprofil. Gewünschte Eigenschaften für Fußbodenbeschichtungen können z.B. ein ästhetisch ansprechendes Aussehen und eine hohe mechanische Beständigkeit sein. Weitere Anforderungen sind z.B. gute Verarbeitbarkeit und Verlauf, ein hoher Glanzgrad sowie der Einsatz umweltfreundlicher Komponenten.

In der Praxis werden heutzutage häufig organische oder organisch-anorganische Hybridsysteme für Fußbodenbeschichtungen eingesetzt. Beispiele sind lösemittelfreie Epoxidharz-Reaktionsbeschichtungen, wässrige Epoxidharz-Beschichtungen, Kunststoff-modifizierte zementöse Systeme (PCC) wie Epoxidharz-modifizierte zementöse Systeme (ECC) oder Polyurethanmodifizierte zementöse Systeme.

Die Kombination von verschiedenen, sich teilweise in den Materialanforderungen widersprechenden Eigenschaften in einem Fußbodenbeschichtungssystem ist dabei häufig schwierig. Während gängige Systeme z.B. hinsichtlich einiger Anforderungen gute Eigenschaften aufweisen, sind die Eigenschaften des Systems in anderer Hinsicht häufig nicht zufriedenstellend.

Auf Wasser basierende Epoxidharz-Beschichtungen weisen eine relativ geringe mechanische und chemische Beständigkeit auf.

Epoxidharz-modifizierte zementöse Systeme weisen oft eine stumpf matte Optik auf und der Glanzgrad ist nicht variabel einstellbar. Übliche Epoxidharz-modifizierte zementöse Systeme weisen einen relativ geringen organischen Bindemittelgehalt von höchstens 5 Gew.-% auf.

WO 2009/150212 A1 offenbart dreikomponentige Epoxidharz-modifizierte zementöse Systeme (ECC) enthaltend wässrige Härter-Zusammensetzungen, welche insbesondere als Beschichtung verwendet werden können. Diese Beschichtungen weisen jedoch einen geringen Glanzgrad auf.

### Darstellung der Erfindung

Die Aufgabe der Erfindung bestand daher in der Bereitstellung einer Zusammensetzung, mit der Bodenbeschichtungen mit einem ausgewogenen Eigenschaftsprofil hergestellt werden können. Insbesondere soll eine Bodenbeschichtung bereitgestellt werden, die gleichzeitig ein ästhetisch ansprechendes Aussehen (Optik, Oberflächenbeschaffenheit), eine gute Verarbeitbarkeit und Verlauf, einen hohen Glanzgrad sowie einen hohen Anteil an umweltfreundlicher Komponenten aufweist. Unter dem Begriff "umweltfreundlicher Komponenten" werden insbesondere Zusätze verstanden, welche nicht zu den nachfolgend beschriebenen "organischen Anteilen **OA"** gehören.

Die Aufgabe konnte überraschenderweise durch eine nachgehend beschriebene mehrkomponentige Zusammensetzung gelöst werden. Die mehrkomponentige Zusammensetzung weist insbesondere eine geringe Menge an organischen Anteilen **OA** auf, wobei es sich bei den organischen Anteilen **OA** um Epoxidharze, Reaktivverdünner, Aminverbindungen **PA** und Verbindungen **VB** handelt.

Die Erfindung betrifft daher eine mehrkomponentige Zusammensetzung, umfassend
A) eine Binderkomponente (A) umfassend mindestens ein Epoxidharz,
B) eine Härterkomponente (B) umfassend mindestens eine Aminverbindung **PA,** und
C) eine feste Komponente (C) umfassend mindestens einen anorganischen Füllstoff,
dadurch gekennzeichnet, dass
- die mehrkomponentige Zusammensetzung 3 - 15 Gew.-% Wasser, bezogen auf das Gesamtgewicht der mehrkomponentigen Zusammensetzung, enthält,
- und dass die mehrkomponentige Zusammensetzung weiter eine Verbindung **VB** der Formel (I) oder (II) 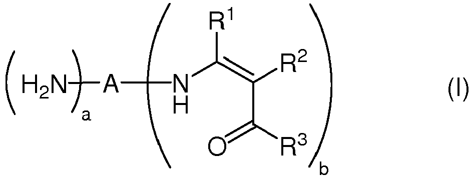 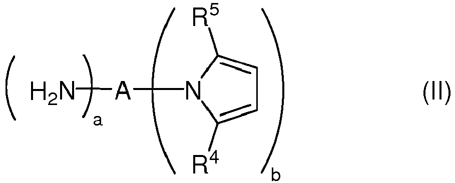
enthält, wobei
entweder
R¹ und R³ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen, und R² für ein Wasserstoffatom oder für eine Alkyl-, Cycloalkyl-, Aryl- oder Arylalkylgruppe mit 1 bis 12 C-Atomen steht,
   oder
R² und R¹ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R³ für eine Alkyl-, Cycloalkyl-, Aryl- oder Arylalkylgruppe mit 1 bis 12 C-Atomen, welche gegebenenfalls Ethergruppen oder Halogenatome aufweist, steht;
   oder
R² und R³ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R¹ für eine Alkyl-, Cycloalkyl-, Aryl- oder Arylalkylgruppe mit 1 bis 12 C-Atomen, welche gegebenenfalls Ethergruppen oder Halogenatome aufweist, steht;
R⁴ und R⁵ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen;
A für einen (a+b)-wertigen Rest eines Polyamin-Polyepoxid-Addukts nach Entfernung von (a+b) primären Aminogruppen steht;
a für eine ganze Zahl von 0 bis 4 steht; und
b für eine ganze Zahl von 1 bis 4 steht;
mit den Massgaben, dass die Summe von a und b für eine ganze Zahl von 1 bis 4 steht, und dass das dem Polyamin-Polyepoxid-Addukt zugrunde liegende Polyepoxid ein Polyepoxid **E,** insbesondere ein Diepoxid **E1,** ist, und ein Epoxy-Equivalent-Gewicht (EEW) von 65 bis 500 g/Eq aufweist,
   - und wobei das Gewichtsverhältnis von Aminverbindung **PA** zu Verbindung **VB** von 4 - 20 beträgt,
   - und wobei der Gewichtsanteil der festen Komponente (C) 25 - 62 Gew.-%, bezogen auf das Gesamtgewicht der mehrkomponentigen Zusammensetzung, beträgt.

Der Begriff "Polyamin" bezeichnet im vorliegenden Dokument Verbindungen mit mindestens zwei primären oder sekundären Aminogruppen.

Als "primäre" Aminogruppe wird im vorliegenden Dokument eine NH₂-Gruppe bezeichnet, die an einen organischen Rest gebunden ist, und als "sekundäre" Aminogruppe wird eine NH-Gruppe bezeichnet, die an zwei organische Reste, welche auch gemeinsam Teil eines Rings sein können, gebunden ist.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer polydispersen Mischung von oligomeren oder polymeren Molekülen bezeichnet, welches üblicherweise mittels GPC gegen Polystyrol als Standard bestimmt wird.

Der Begriff "Polyepoxid" bezeichnet im vorliegenden Dokument Verbindungen mit mindestens zwei Epoxidgruppen. Als "Diepoxid" werden Verbindungen mit zwei Epoxidgruppen bezeichnet.

Als "Epoxidgruppe" oder "Epoxygruppe" wird im vorliegenden Dokument das Strukturelement 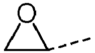 bezeichnet.

Die Acyl-Enaminogruppen der Formel (i) stehen in einem Gleichgewicht mit den tautomeren Isomeren der Formel (ii) und der Formel (iii). Bei jeder Erwähnung der Acyl-Enaminogruppen der Formel (i) sind die Tautomeren der Formel (ii) und der Formel (iii) ebenfalls gemeint, auch wenn dies jeweils nicht ausdrücklich erwähnt ist.

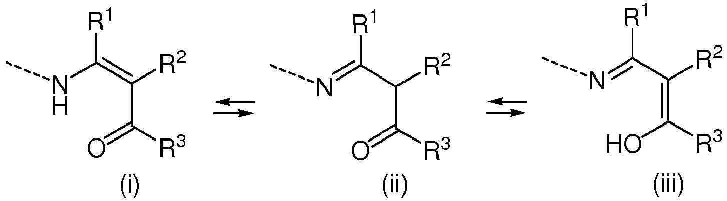

Die gestrichelten Linien in den Formeln stellen in diesem Dokument jeweils die Bindung zwischen einem Substituenten und dem zugehörigen Molekülrest dar.

Bevorzugt stehen R¹ und R³ für je eine Methylgruppe.

Bevorzugt steht R² für ein Wasserstoffatom.

Bevorzugt stehen R⁴ und R⁵ für je eine Methylgruppe.

Bevorzugt steht a für 0.

Bevorzugt steht b für 1.

Das Polyamin-Polyepoxid-Addukt, von welchem sich A in den Formeln (I) und (II) ableitet, ist frei von Epoxidgruppen und weist (a+b) primäre Aminogruppen auf. Es stellt ein Additionsprodukt von mindestens einem Polyamin **A1** und gegebenenfalls weiteren Aminen, bevorzugt mindestens einem weiteren Amin **A2,** mit mindestens einem Polyepoxid **E,** insbesondere einem Diepoxid **E1,** dar. Das Polyepoxid **E** weist ein Epoxy-Equivalent-Gewicht von 65 bis 500 g/Eq auf. Das Polyamin **A1** stellt bevorzugt ein Polyamin mit zwei primären Aminogruppen dar. Das Amin **A2** stellt bevorzugt ein Amin mit nur einer primären Aminogruppe dar. Das Polyepoxid **E** stellt bevorzugt ein Diepoxid **E1** dar, besonders bevorzugt einen flüssigen Diglycidylether von Bisphenolen, insbesondere von Bisphenol-A.

Die Abkürzung "EEW" steht im vorliegenden Dokument für "Epoxy-Equivalent-Gewicht".

Als "Glycidylether" wird im vorliegenden Dokument ein Ether von 2,3-Epoxy-1-propanol (Glycidol) bezeichnet.

Eine Verbindung **VB** der Formel (I) stellt bevorzugt eine Verbindung **VB** der Formel (I a) oder (I b) dar. Eine Verbindung **VB** der Formel (II) stellt bevorzugt eine Verbindung **VB** der Formel (II a) oder (II b) dar.

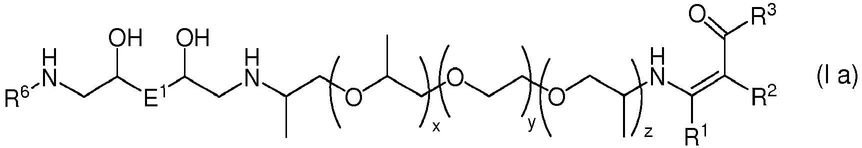

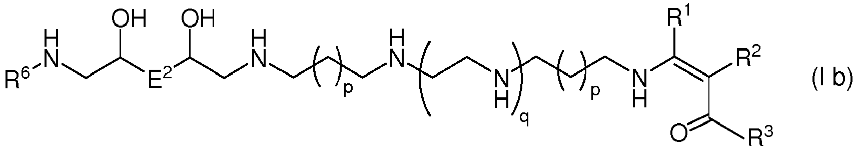

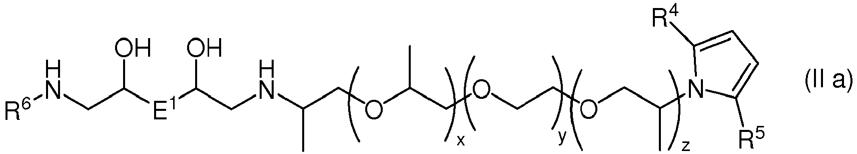

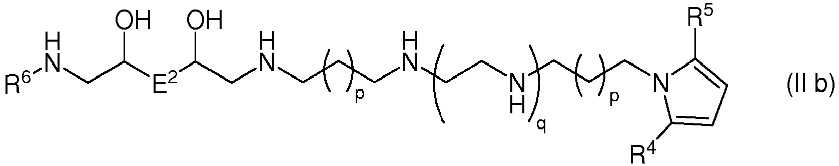

In den Formeln (I a), (I b), (II a) und (II b) weisen R¹, R², R³, R⁴ und R⁵ die bereits genannten Bedeutungen auf, und
R⁶ steht für eine Alkyl- oder Cycloalkyl- oder Arylalkylgruppe, welche gegebenenfalls Ether- oder sekundäre Aminogruppen aufweist;
E¹ und E² stehen unabhängig voneinander jeweils für den Rest eines Diepoxids **E1** mit einem EEW von 65 bis 500 g/Eq nach Entfernung von zwei Epoxidgruppen;
x steht für eine ganze Zahl von 0 bis 50;
y steht für eine ganze Zahl von 0 bis 100, bevorzugt für 10 bis 50;
z steht für eine ganze Zahl von 1 bis 50;
(x+z) steht für eine ganze Zahl von 1 bis 100, bevorzugt für 1 bis 10;
p steht für 0 oder 1; und
q steht für 0, 1, 2 oder 3.

Bevorzugt steht R⁶ in den Formeln (I a), (II a), (I b) und (II b) für eine Alkyl- oder Cycloalkyl- oder Arylalkylgruppe mit mindestens 4 C-Atomen, insbesondere mit 4 bis 18 C-Atomen, welche gegebenenfalls Ether- oder sekundäre Aminogruppen aufweist.

Bevorzugt ist das Diepoxid **E1** ausgewählt aus der Gruppe bestehend aus einem Bisphenol-A-, Bisphenol-F- und Bisphenol-A/F-Diglycidylether mit einem Epoxy-Equivalent-Gewicht von 156 bis 250 g/Eq, N,N-Diglycidylanilin und einem Polyglykol-Diglycidylether mit einem Epoxy-Equivalent-Gewicht von 170 bis 340 g/Eq.

Besonders bevorzugt ist das Diepoxid **E1** ein Bisphenol-A-, Bisphenol-F- und Bisphenol-A/F-Diglycidylether.

Somit stehen E¹ in den Formeln (I a) und (II a) und E² in den Formeln (I b) und (II b) bevorzugt je unabhängig voneinander jeweils für den Rest eines Diepoxids **E1,** das ausgewählt ist aus der Gruppe bestehend aus einem Bisphenol-A-, Bisphenol-F- und Bisphenol-A/F-Diglycidylether mit einem Epoxy-Equivalent-Gewicht von 156 bis 250 g/Eq, N,N-Diglycidylanilin und einem Polyglykol-Diglycidylether mit einem Epoxy-Equivalent-Gewicht von 170 bis 340 g/Eq, insbesondere einem Bisphenol-A-, Bisphenol-F- und Bisphenol-A/F-Diglycidylether mit einem Epoxy-Equivalent-Gewicht von 156 bis 250 g/Eq, nach Entfernung von zwei Epoxidgruppen.

Vorzugsweise ist die Verbindung VB der Formel (I) oder (II) enthalten in der Härterkomponente (B).

Bevorzugte Ausführungsformen der Zusammensetzung sind in den abhängigen Ansprüchen wiedergegeben. Im Folgenden wird die Erfindung ausführlich erläutert.

### Weg zur Ausführung der Erfindung

Verbindungsnamen, die mit "Poly" beginnen, bezeichnen Substanzen, die pro Molekül formal zwei oder mehr der funktionellen Gruppen enthalten, die in ihren Namen auftreten. Die Verbindung kann monomer, oligomer oder polymer sein. Ein Polyamin ist z.B. eine Verbindung mit zwei oder mehr Aminogruppen. Ein Polyepoxid ist eine Verbindung mit zwei oder mehr Epoxygruppen.

Epoxidharze sind Polyepoxide, d.h. Verbindungen mit zwei oder mehr Epoxidgruppen. Epoxidharze sind bevorzugt oligomere oder polymere Verbindungen. Epoxidharze werden manchmal auch in Verbindung mit sogenannten Reaktivverdünnern eingesetzt. Reaktivverdünner sind Mono- oder Polyepoxide. Die Reaktivverdünner besitzen eine geringere Viskosität als das eingesetzte Epoxidharz und dienen dazu, die Viskosität des eingesetzten Epoxidharzes zu verringern. Der optionale Reaktivverdünner wird ebenfalls in die organische Bindemittelmatrix eingebaut und wird daher hier für die Bestimmung des organischen Bindemittelgehalts den Epoxidharzen zugerechnet.

Das Epoxid-Equivalentgewicht (EEW) kann gemäß DIN 53188 bestimmt werden und wird in g/Eq. angegeben. Das NH-Equivalentgewicht kann gemäß DIN 16945 bestimmt werden und wird in g/Eq. angegeben. Das stöchiometrische Verhältnis von Epoxidfunktionalität zu Aminfunktionalität ist der Quotient von Epoxid-Equivalentgewicht zu NH-Equivalentgewicht und wird häufig in % angegeben. Das NH-Equivalentgewicht bezieht sich dabei auf die aktiven NH-Wasserstoffe. Ein primäres Amin weist z.B. zwei aktive NH-Wasserstoffe auf.

Bei der Zusammensetzung der Erfindung handelt es sich um eine mehrkomponentige Zusammensetzung, d.h. die Zusammensetzung umfasst mehrere, insbesondere drei oder mehr individuelle Komponenten, die erst bei Gebrauch miteinander gemischt werden. Die Komponenten werden vor Gebrauch gesondert gelagert, um spontane Reaktion zu vermeiden. Für den Gebrauch werden die Komponenten miteinander gemischt. Nach der Vermischung beginnen gegebenenfalls anorganische Hydratations- und organische Vernetzungsreaktionen, die schließlich zur Härtung der Mischung führen.

Die erfindungsgemäße Zusammensetzung umfasst eine Binderkomponente (A), eine Härterkomponente (B) und eine feste Komponente (C). Es kann sich um eine dreikomponentige Zusammensetzung handeln, die nur aus diesen drei Komponenten besteht. Die Zusammensetzung kann aber nach Bedarf auch eine oder mehrere weitere zusätzliche Komponenten umfassen. Wenn z.B. die erfindungsgemäße mehrkomponentige Zusammensetzung in der bevorzugten Ausführungsform Pigmente als Farbmittel enthält, können diese in mindestens einer der drei genannten Komponenten (A), (B) oder (C) und/oder in einer zusätzlichen Pigmentkomponente (D) enthalten sein.

Es ist klar, dass der Anteil eines bestimmten Inhaltsstoffs in der Mischung der Komponenten von dem Anteil dieses Inhaltsstoffs in der betreffenden Komponente und dem Mischungsverhältnis der Komponenten abhängt. Anteile bzw. Verhältnisse von bestimmten Inhaltsstoffen, die hier angegeben werden, beziehen sich, sofern nicht anders angegeben, auf die zweckmäßigen bzw. geeigneten Gewichtsanteile bzw. Gewichtsverhältnisse der Inhaltsstoffe in der Mischung der Komponenten der mehrkomponentigen Zusammensetzung. Diese wird z.B. durch Mischen der Komponenten in geeigneten Mischungsverhältnissen gemäß Gebrauchsanweisung erhalten.

Die Binderkomponente (A) umfasst mindestens ein Epoxidharz und gegebenenfalls einen Reaktivverdünner. Die Binderkomponente (A) ist vorzugsweise eine flüssige Komponente. Sie kann viskos sein, ist aber im Allgemeinen gießfähig.

Die Binderkomponente (A) enthält mindestens ein Epoxidharz. Es kann ein Epoxidharz oder eine Mischung von zwei oder mehr Epoxidharzen eingesetzt werden. Als Epoxidharz können alle in der Epoxychemie üblichen Epoxidharze eingesetzt werden. Epoxidharze können z.B. auf bekannte Art und Weise aus der Oxidation von den entsprechenden Olefinen oder aus der Reaktion von Epichlorhydrin mit den entsprechenden Polyolen oder Polyphenolen hergestellt werden.

Epoxidharze können in Epoxid-Flüssigharze und Epoxid-Festharze unterteilt werden. Das Epoxidharz kann z.B. ein Epoxy-Equivalentgewicht von 156 bis 500 g/Eq. aufweisen. Das Epoxidharz ist vorzugsweise ein Diepoxid.

In einer Ausführungsform kann das Epoxidharz ein aromatisches Epoxidharz sein. Dafür geeignet sind beispielsweise Epoxid-Flüssigharze der Formel (III), 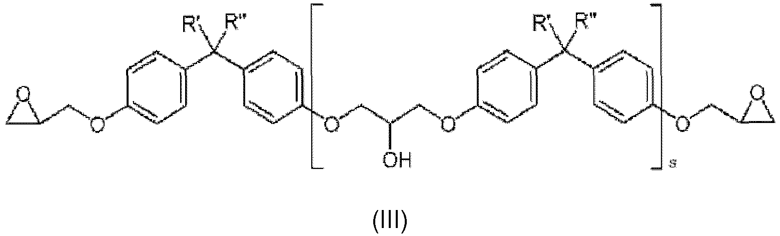 wobei R' und R" unabhängig voneinander jeweils für ein Wasserstoffatom oder für eine Methylgruppe stehen, und s im Mittel für einen Wert von 0 bis kleiner 2 und bevorzugt 0 bis 1 steht. Bevorzugt sind solche Flüssigharze der Formel (III), bei denen der Index s im Mittel für einen Wert von kleiner als 0,2 steht.

Bei den Epoxidharzen der Formel (III) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Solche Epoxid-Flüssigharze sind kommerziell erhältlich, z.B. unter den Bezeichnungen Araldite® von Huntsman, D.E.Fi.® von Dow, Epikote® von Momentive, Epalloy® von CVC, Chem Res® von Cognis oder Beckopox® von Cytec.

Weitere geeignete aromatische Epoxidharze sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenylethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynapht-1-yl)-methan, Bis-(4-hydroxynapht-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylenbis-(1-methyl-ethyliden)]-bisanilin (Bisanilin-M).

In einer weiteren Ausführungsform kann es sich beim Epoxidharz um ein aliphatisches oder cycloaliphatisches Epoxidharz handeln, wie z.B.
- Diglycidylether;
- ein Glycidylether eines gesättigten oder ungesättigten, verzweigten oder unverzweigten, zyklischen oder offenkettigen C₂- bis C₃₀-Diols, wie z.B. Ethylenglykol, Propylenglykol, Butylenglykol, Hexandiol, Octandiol, ein Polypropylenglykol, Dimethylolcyclohexan, Neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Weitere Beispiele für einsetzbare Epoxidharze sind Epoxidharze, die aus der Oxidation von Olefinen hergestellt wurden, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Weitere Beispiele für einsetzbare Epoxidharze sind ein Bisphenol-A-, -F- oder - A/F-Festharz, die aufgebaut sind, wie die vorstehend genannten Epoxid-Flüssigharze der Formel (III), außer dass der Index s einen Wert von 2 bis 12 aufweist. Weitere Beispiele sind alle vorstehend genannten Epoxidharze, die durch die Umsetzung mit mindestens einem Polyoxyalkylenpolyol hydrophil modifiziert sind.

Bevorzugt als Epoxidharz sind Bisphenol-A-, -F- oder -A/F-Fest- oder Flüssigharze, wie sie z.B. kommerziell von Dow, Huntsman und Momentive erhältlich sind. Besonders bevorzugt werden als Epoxidharze Diepoxide aus einem Bisphenol-A-, Bisphenol-F- und Bisphenol-A/F-Diglycidylether eingesetzt, insbesondere solche mit einem Epoxid-Equivalentgewicht von 156 bis 250 g/Eq, z.B. die Handelsprodukte Araldite® GY 250, Araldite® PY 304, Araldite® GY 282 (von Huntsman); D.E.R. ® 331, D.E.R. ® 330 (von Dow); Epikote® 828, Epikote® 862 (von Momentive), und N,N-Diglycidylanilin und einem Polyglykol-Diglycidylether, bevorzugt mit einem Epoxy-Equivalentgewicht von 170 bis 340 g/Eq., z.B. die Handelsprodukte D.E.R.® 732 und D.E.R.® 736 (von Dow).

Es kann vorteilhaft sein, dass die Binderkomponente (A) mindestens einen Reaktivverdünner enthält. Dies wird, wie gesagt, für den organischen Bindemittelanteil dem Epoxidharz zugerechnet. Es können ein oder mehrere Reaktivverdünner eingesetzt werden. Als Reaktivverdünner geeignet sind Mono- und Polyepoxide. Die Zugabe eines Reaktivverdünners zum Epoxidharz bewirkt eine Reduktion der Viskosität, sowie im ausgehärteten Zustand der Epoxidharz-Zusammensetzung eine Reduktion der Glasübergangstemperatur und der mechanischen Werte.

Beispiele für Reaktivverdünner sind Glycidylether von ein- oder mehrwertigen Phenolen und aliphatischen oder cycloaliphatischen Alkoholen, wie insbesondere die bereits als aliphatische oder cycloaliphatische Epoxidharze genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether, C₁₂- bis C₁₄-Alkylglycidylether oder C₁₃- bis C₁₅-Alkylglycidylether, kommerziell erhältlich als Erisys® GE-7, Erisys® GE-8 (von CVC) oder als Epilox® P 13 - 19 (von Leuna).

Die Binderkomponente (A) kann gegebenenfalls ein oder mehrere weitere Additive enthalten. Geeignete Additive werden weiter unten erläutert.

Vorzugsweise enthält die mehrkomponentige Zusammensetzung, bezogen auf das Gesamtgewicht der mehrkomponentigen Zusammensetzung, 25 - 40 Gew.-%, insbesondere 25 - 35 Gew.-%, an Binderkomponente (A).

Die Härterkomponente (B) umfasst mindestens eine Aminverbindung **PA.** Die Härterkomponente (B) ist vorzugsweise eine flüssige Komponente. Sie kann viskos sein, ist aber im Allgemeinen gießfähig.

Bei der Aminverbindung **PA** kann es sich um jede Aminverbindung handeln, die üblicherweise in der Technik als Härter für Epoxidharze eingesetzt wird. Solche Aminhärter sind im Handel erhältlich. Es können eine Aminverbindung oder zwei oder mehr Aminverbindungen eingesetzt werden. Prinzipiell geeignet als Aminverbindungen sind Monoamine, sofern es sich um ein primäres Amin handelt, Verbindungen mit mindestens zwei Aminogruppen sind aber bevorzugter. Bei den Aminogruppen kann es sich um primäre und/oder sekundäre Aminogruppen handeln. Es können gegebenenfalls auch blockierte Aminverbindungen eingesetzt werden.

Vorzugsweise ist die mindestens eine Aminverbindung **PA** ausgewählt ist aus der Gruppe bestehend aus Polyamin **A4,** Polyaminoamid, Polyamin-Polyepoxid-Addukt **AD** und Polyaminoamid-Polyepoxid-Addukt oder eine Mischung von mindestens zwei dieser Verbindungen, die jeweils insbesondere mindestens zwei Aminogruppen enthalten, wobei die Aminogruppen gegebenenfalls in blockierter Form vorliegen können, was in der Regel aber nicht bevorzugt ist.

Vorzugsweise ist das Polyamin-Polyepoxid-Addukt **AD** ein Addukt aus mindestens einem Polyamin **A3** mit mindestens zwei Aminogruppen in Form von primären oder sekundären Aminogruppen und mindestens einem Polyepoxid **E** mit einem Epoxy-Equivalent-Gewicht (EEW) von 65 bis 500 g/Eq, wobei das Addukt terminale primäre und/oder sekundäre Aminogruppen aufweist, und wobei das Polyamin **A3** ausgewählt ist aus der Gruppe bestehend aus einerseits Polyoxyalkylen-Diaminen mit einem Molekulargewicht von höchstens 1000 g/mol, und andererseits Isophorondiamin (IPDA), 2,2,4- und 2,4,4-Trimethylhexamethylendiamin (TMD), 1,3-Xylylendiamin (meta-Xylylendiamin oder MXDA), 2-Butyl-2-ethyl-1,5-pentandiamin (C11-Neodiamin), N-Ethyl-1,3-propandiamin und N-Cyclohexyl-1,3-propandiamin.

Zur Herstellung eines geeigneten Adduktes **AD** sind als Polyepoxid **E** dieselben Polyepoxide geeignet und auch bevorzugt, wie sie bereits zur Herstellung einer Verbindung **VB** der Formel (I) oder (II) beschrieben sind, insbesondere die erwähnten Diepoxide **E1.**

Ein besonders geeignetes Addukt **AD** ist das Addukt aus zwei Mol Polyamin **A3** mit zwei Aminogruppen in Form von primären oder sekundären Aminogruppen und einem Mol Diepoxid **E1.**

Vorzugsweise ist das Polyamin **A4** ausgewählt ist aus der Gruppe bestehend aus Isophorondiamin (IPDA), Bis-(4-aminocyclohexyl)-methan (H12-MDA), Bis-(4-amino-3-methylcyclohexyl)-methan, 2,2,4- und 2,4,4-Trimethylhexamethylendiamin (TMD), 1,3-Xylylendiamin (meta-Xylylendiamin oder MXDA) und 2-Butyl-2-ethyl-1,5-pentandiamin (C11-Neodiamin).

Als Polyamidoamin wird das Reaktionsprodukt aus einer ein- oder mehrwertigen Carbonsäure, beziehungsweise deren Ester oder Anhydride, und einem aliphatischen, cycloaliphatischen oder aromatischen Polyamin bezeichnet, wobei das Polyamin im stöchiometrischen Überschuss eingesetzt wird. Als mehrwertige Carbonsäure wird üblicherweise eine sogenannte Dimerfettsäure verwendet, und als Polyamin wird üblicherweise ein Polyalkylenamin wie beispielsweise TETA verwendet. Kommerziell erhältliche Polyamidoamine sind beispielsweise Versamid® 100, 125, 140 und 150 (von Cognis), Aradur® 223, 250 und 848 (von Huntsman), Euretek® 3607, Euretek® 530 (von Huntsman), Beckopox® EH 651, EH 654, EH 655, EH 661 und EH 663 (von Cytec).

Es ist besonders bevorzugt, dass die mindestens eine Aminverbindung **PA** ein Polyamin **A4** oder eine Mischung aus Polyamin **A4** und Polyamin-Polyepoxid-Addukt **AD** ist.

Vorzugsweise beträgt das Gewichtsverhältnis von Polyamin **A4** zu Polyamin-Polyepoxid-Addukt **AD** von 5 - 50, insbesondere 10 - 45, bevorzugt 15 - 25.

In der mehrkomponentigen Zusammensetzung beträgt das Gewichtsverhältnis von Aminverbindung **PA** zu Verbindung **VB** von 4 - 20. Vorzugsweise beträgt das Gewichtsverhältnis von Aminverbindung **PA** zu Verbindung **VB** von 6 - 16, insbesondere 6 - 15, bevorzugt 7 - 10.

Aus dem Vergleichsbeispiel **Ref2** (ohne Verbindung **VB)** ist ersichtlich, dass bei einem Fehlen insbesondere die Optik und der Verlauf unzureichende Werte erreichen. Auch die Werte für den Glanz sind signifikant schlechter als beispielsweise für das Beispiel **Ex1** oder **Ex2.**

Weiter zeigen das Beispiel **Ex3,** dass höhere Werte für das Gewichtsverhältnis von Aminverbindung **PA** zu Verbindung **VB** in Zusammensetzungen ohne hydraulisches anorganisches Bindemittel, insbesondere Zement, zu einer Verminderung im Glanz führen. Weiter ist in Beispiel **Ex8** ersichtlich, dass sich in Zusammensetzungen, welche ein hydraulisches anorganisches Bindemittel, insbesondere Zement, aufweisen, die Glanzwerte verbessern, jedoch die Werte für die Optik sowie die Verarbeitbarkeit sich verschlechtern.

Weiter zeigen die Beispiele **Ex4** und **Ex7,** dass tiefere Werte für das Gewichtsverhältnis von Aminverbindung **PA** zu Verbindung **VB** zu einer Verminderung in Optik, Verlauf und Verarbeitbarkeit führen. Weiter gibt es viele Nadelstiche.

Die Härterkomponente (B) kann gegebenenfalls ein oder mehrere weitere Additive enthalten. Geeignete Additive werden weiter unten erläutert.

Die feste Komponente (C) umfasst mindestens einen anorganischen Füllstoff. Die Komponente (C) ist eine feste Komponente und vorzugsweise pulverförmig.

Die anorganischen Füllstoffe sind bevorzugt ausgewählt aus der Liste bestehend aus Siliciumverbindungen, wie Siliciumdioxid, Silicaten und gefällten und pyrogenen Kieselsäuren; Metalloxiden, wie Titandioxid, Eisenoxid, Alumina, Zinkoxid und Magnesiumoxid; Metallcarbonaten, wie Calciumcarbonat oder Dolomit; Metallsulfaten, wie Calciumsulfat (Gips) und Bariumsulfat; Metallhydroxiden, wie Aluminiumhydroxid, Nitriden oder Carbiden, Tonmineralen, wie Kaolin, Gläsern und keramischen Werkstoffen.

Das Siliciumdioxid kann beispielsweise Quarz sein, z. B. in Form von Quarzmehl oder Quarzsand. Das Silikat kann beispielsweise Talk, Mica oder Wollastonit sein. Das Sulfat kann beispielsweise Baryt (Schwerspat, Bariumsulfat) sein. Es können auch Gemische verschiedener Füllstoffen und/oder verschiedene Fraktionen eines Füllstoffs mit unterschiedlichen Größen eingesetzt werden. Die Füllstoffe können übliche Formen aufweisen. Insbesondere können Pulver eingesetzt werden, aber auch Hohlkugeln (zum Beispiel aus Glas oder Keramik) oder Fasern.

Besonders bevorzugt handelt es sich bei dem anorganischen Füllstoff um Siliciumdioxid, insbesondere um Quarz, besonders bevorzugt Quarzsand.

Vorzugsweise weisen die eingesetzten Füllstoffe Korngrößen, beispielsweise von 1 µm bis 1 cm, insbesondere zwischen 10 µm und 6 mm, auf. Die mittlere Korngröße der Füllstoffe kann beispielsweise zwischen 10 µm und 3 mm liegen. Die Korngröße und die Korngrößenverteilung von Füllstoffen kann durch Siebanalyse oder durch mikroskopische Untersuchung ermittelt werden.

Die feste Komponente (C) kann ferner ein oder mehrere zusätzliche Additive enthalten. Beispiele sind in der Zementindustrie übliche Hilfs- und Zusatzmittel wie zum Beispiel Verflüssiger, Abbindebeschleuniger, Wasserreduzierer oder Entlüfter/Entschäumer.

In der mehrkomponentigen Zusammensetzung beträgt der Gewichtsanteil der festen Komponente (C) 25 - 62 Gew.-%, bezogen auf das Gesamtgewicht der mehrkomponentigen Zusammensetzung. Vorzugsweise beträgt der Gewichtsanteil der festen Komponente (C) 30 - 60 Gew.-%, insbesondere 40 - 57.5 Gew.-%, vorzugsweise 45 - 55 Gew.-%, bezogen auf das Gesamtgewicht der mehrkomponentigen Zusammensetzung.

Aus dem Vergleichsbeispiel **Ref5** (Gewichtsanteil Komponente (C) 64.3 Gew.-%) ist ersichtlich, dass bei einem zu hohen Anteil an Komponente (C) Glanz, Optik, Verlauf sowie die Verarbeitbarkeit unzureichende Werte erhalten werden.

In einer bevorzugten Ausführungsform enthält die mehrkomponentige Zusammensetzung 5 - 62 Gew.-%, 5 - 50 Gew.-%, 5 - 30 Gew.-%, 8 - 25 Gew.-%, 12 - 22.5 Gew.-%, 18 - 22 Gew.-%, eines hydraulischen anorganischen Bindemittels, vorzugsweise Zement, bezogen auf das Gesamtgewicht der mehrkomponentigen Zusammensetzung.

Dies ist insbesondere vorteilhaft um Beschichtungen oder Grundierungen, insbesondere Bodenbeschichtungen oder Bodengrundierungen, zu erhalten. Dabei besteht der Hauptunterschied zwischen Beschichtung und Grundierungen in der aufgebrachten Menge der erfindungsgemäßen Zusammensetzung. Als Grundierungen wird die erfindungsgemäße Zusammensetzung bezeichnet wenn eine relative geringe Menge Material aufgebracht wird, um Schichtdicken bis ca. 500µm zu erhalten. Noch größere Schichtdicken werden im Allgemeinen als Beschichtungen bezeichnet, wobei der Übergang von Grundierungen zu Beschichtung nicht scharf abgegrenzt ist. Vorzugsweise weist eine Grundierung eine Schichtdicke von 0.2 - 0.5 mm auf. Eine Beschichtung weist vorzugsweise eine Schichtdicke von 0.8 - 3.5 mm auf.

Vorzugsweise befindet sich mehr als 70 Gew.-%, mehr als 80 Gew.-%, mehr als 90 Gew.-%, insbesondere mehr als 95 Gew.-%, besonders bevorzugt 100 Gew.-%, des hydraulischen anorganischen Bindemittels, vorzugsweise Zement, in der festen Komponente (C).

In einer bevorzugten Ausführungsform enthält die mehrkomponentige Zusammensetzung 0 - 5 Gew.-%, 0 - 2 Gew.-%, 0 - 1 Gew.-%, 0 - 0.5 Gew.-%, insbesondere 0 - 0.1 Gew.-%, eines hydraulischen anorganischen Bindemittels, vorzugsweise Zement, bezogen auf das Gesamtgewicht der mehrkomponentigen Zusammensetzung.

Dies ist insbesondere vorteilhaft um Versiegelungen, auch "Topcoats" genannt, insbesondere Bodenversiegelungen, zu erhalten. Solche Versiegelungen weisen vorzugsweise eine Schichtdicke von 0.1 - 0.9 mm, insbesondere 0.2 - 0.5 mm, auf.

Die vorgehend genannten hydraulischen anorganischen Bindemittel sind anorganische Bindemittel, die mit Wasser auch unter Wasser erhärtbar sind. Hydraulische anorganische Bindemittel schließen hier auch sogenannte latenthydraulische Bindemittel, die unter dem Einwirken von Zusätzen mit Wasser abbinden, wie z.B. Hochofenschlacke, mit ein.

Beispiele für geeignete hydraulische anorganische Bindemittel sind hydraulischer Kalk, Zement, Flugasche, Reisschalenasche, calcinierte Recyclingprodukte der Papierindustrie, Hüttensand und Hochofenschlacke und Mischungen davon, wobei Zement besonders bevorzugt ist. Es können alle üblichen Zementsorten eingesetzt werden, insbesondere ein Zement gemäß Euronorm EN 197. Natürlich können auch Zementsorten gemäß einer anderen Zementnorm eingesetzt werden. Es kann ein Zement oder eine Mischung verschiedener Zementsorten eingesetzt werden.

Bevorzugt als Zement sind Portlandzemente, Sulfoaluminatzemente und Tonerdeschmelzzemente, insbesondere Portlandzement. Mischungen von Zementen können zu besonders guten Eigenschaften führen. Beispiele sind Mischungen von mindestens einem Portlandzement mit entweder mindestens einem Sulfoaluminatzement oder mit mindestens einem Tonerdeschmelzzement. Besonders vorteilhaft ist der Einsatz von Weißzement.

Die mehrkomponentige Zusammensetzung umfasst 3 - 15 Gew.-% Wasser, bezogen auf das Gesamtgewicht der mehrkomponentigen Zusammensetzung. Vorzugsweise enthält die mehrkomponentige Zusammensetzung 4 - 12 Gew.-%, insbesondere 5 - 10 Gew.-%, bevorzugt 6 - 9 Gew.-% Wasser, bezogen auf das Gesamtgewicht der mehrkomponentigen Zusammensetzung.

Aus dem Vergleichsbeispiel **Ref4** (Gewichtsanteil Wasser 19.9 Gew.-%) ist ersichtlich, dass bei einem zu hohen Anteil an Wasser für Glanz, Optik, Verlauf sowie die Verarbeitbarkeit unzureichende Werte erhalten werden.

Weiter zeigt das Beispiel **Ex9** (Gewichtsanteil Wasser 12.1 Gew.-%), dass bei Zusammensetzungen, welche anorganische Bindemittel, insbesondere Zement, enthalten, ein Gewichtsanteil oberhalb von 12 Gew.-% zu einer leichten Verschlechterung der Werte von Glanz, Verlauf und Verarbeitbarkeit führen.

Vorzugsweise ist mehr als 50 Gew.-%, mehr als 80 Gew.-%, insbesondere mehr als 90 Gew.-%, mehr als 95 Gew.-%, des Wassers enthalten in der Härterkomponente (B).

Es kann weiter vorteilhaft sein, die Menge an Wasser in der mehrkomponentigen Zusammensetzung vorzugsweise so zu wählen, dass das Gewichtsverhältnis von Wasser zu hydraulischem anorganischem Bindemittel, bevorzugt Zement, im Bereich von 0,3 bis 0,8 liegt.

Es kann weiter vorteilhaft sein, dass das stöchiometrische Verhältnis von Epoxidfunktionalität zu Aminfunktionalität von 75% - 125% (bzw. 0.75 - 1.25), vorzugsweise von 80% - 120%, insbesondere 90% - 110%, beträgt.

Weiter kann es vorteilhaft sein, dass das Gewichtsverhältnis von der festen Komponente (C) zu der Binderkomponente (A) von 1.5 - 2.3, insbesondere 1.6 - 2.0, beträgt.

Weiter kann es vorteilhaft sein, dass die mehrkomponentige Zusammensetzung, bezogen auf das Gesamtgewicht, ≤ 50 Gew.-%, ≤ 45 Gew.-%, ≤ 40 Gew.-%, 15 - 32 Gew.-%, 20 - 32 Gew.-%, 25 - 31 Gew.-%, 26 - 30 Gew.-% organische Anteile **OA** enthält, wobei es sich bei den organischen Anteilen **OA** um Epoxidharze, Reaktivverdünner, Aminverbindungen **PA** und Verbindungen **VB** handelt.

Aus dem Vergleich von Vergleichsbeispiel **Ref1** (ohne Wasser und ohne Verbindung **VB)** mit beispielsweise Beispiel **Ex1** oder **Ex2** ist ersichtlich, dass bei den erfindungsgemässen Beispielen dieselben Werte für Glanz, Optik, Verlauf sowie Verarbeitbarkeit jedoch mit einem signifikant tieferen Anteil an organischen Anteilen **OA** erhalten werden können. Dadurch kann ein hoher Anteil an umweltfreundlichen Komponenten erreicht werden.

Weiter kann es vorteilhaft sein, dass das Gewichtsverhältnis von organischen Anteilen **OA** zu der Gesamtmenge an Wasser von 2 - 8, insbesondere 2.5 - 5, beträgt, wobei es sich bei den organischen Anteilen **OA** um Epoxidharze, Reaktivverdünner, Aminverbindungen **PA** und Verbindungen **VB** handelt.

Weitere optionale Additive, die insbesondere in der Binderkomponente (A) und/ oder in der Härterkomponente (B), gegebenenfalls aber auch in einer oder mehreren anderen Komponenten enthalten sein können, sind auf diesem Gebiet üblicherweise eingesetzte Additive, wie z.B. Stabilisatoren gegen Wärme, Licht oder UV-Strahlung; flammhemmende Substanzen und Biozide.

Die mehrkomponentige Zusammensetzung kann neben den drei genannten Komponenten nach Bedarf weitere zusätzliche Komponenten umfassen. Beispiele für solche optionale zusätzliche Komponente ist eine Pigmentkomponente (D).

Bei den Pigmenten kann es sich um anorganische oder organische Pigmente handeln. Beispiele für anorganische Pigmente sind Titandioxid, Ruß, Bismutpigmente, Eisenoxidpigmente, Chromoxide, Mischphasenoxid-Pigmente, Eisencyanblau, Ultramarin, Kobaltpigmente und Chromatpigmente. Beispiele für organische Pigmente sind Azopigmente und polycyclische Pigmente wie Kupferphthalocyanin-, Chinacridone-, Diketopyrrolopyrrol-, Perylen-, Isoindolin-, Dioxazin- und Indanthron-Pigmente.

Die mehrkomponentige Zusammensetzung enthält ferner bevorzugt 0,1 Gew.-% bis 10 Gew.-%, bevorzugt 0,5 Gew.-% bis 5 Gew.-% an Pigment als Farbmittel, bezogen auf das Gesamtgewicht.

Ferner kann z.B. ein Teil des Wassers als eigene Komponente vorliegen, die erst bei Mischung der Komponenten vor Gebrauch zugegeben wird, um die gewünschte Wassermenge einzustellen.

Die Erfindung betrifft auch ein Verfahren zur Herstellung einer Beschichtung, Grundierung oder Versiegelung, vorzugsweise einer Bodenbeschichtung, Bodengrundierung oder Bodenversiegelung, mit einer vorgehend beschriebenen mehrkomponentigen Zusammensetzung, wobei das Verfahren folgende Verfahrensschritte umfasst
a) Mischen der Binderkomponente (A) und der Härterkomponente (B),
b) Zugabe der festen Komponente (C) und gegebenenfalls ein hydraulisches anorganisches Bindemittel sowie gegebenenfalls Zugabe von Wasser und Verbindung **VB,** falls Wasser und Verbindung **VB** nicht bereits in der Binderkomponente (A) oder der Härterkomponente (B) enthalten waren, zu der in Schritt a) erhaltenen Mischung unter Rühren, um eine gemischte Zusammensetzung zu erhalten,
c) Aufbringen der erhaltenen gemischten Zusammensetzung auf ein Substrat,
d) gegebenenfalls Glätten oder Entlüften der aufgebrachten gemischten Zusammensetzung und
e) Aushärten der aufgebrachten gemischten Zusammensetzung, um die Beschichtung, Grundierung oder Versiegelung zu erhalten.

Das Aufbringen der gemischten Zusammensetzung und die Aushärtung erfolgen vorteilhaft z.B. bei Temperaturen im Bereich von 5 bis 40°C.

Wie erläutert, kann die mehrkomponentige Zusammensetzung auch ein oder mehrere zusätzliche Komponenten umfassen. Die Art und Reihenfolge der Zugabe der zusätzlichen Komponenten zur Mischung der Zusammensetzung ist beliebig, vorzugsweise werden aber eine oder mehrere zusätzliche flüssige Komponenten, sofern eingesetzt, in Schritt a) zugemischt. Eine oder mehrere zusätzliche feste Komponenten, sofern eingesetzt, werden bevorzugt in Schritt b) zugemischt.

Das Substrat kann vor dem Aufbringen der gemischten Zusammensetzung mit einer Grundierung versehen werden. Ferner ist es möglich, auf die aufgebrachte gemischte Zusammensetzung eine Deckschicht als Versiegelungsschicht aufzubringen.

Bei dem Substrat kann es sich um jedes beliebiges Material handeln. Vorzugsweise handelt es sich um einen Bodenbelag, z.B. aus Beton, Mörtel oder Estrich, der gegebenenfalls eine Beschichtung, wie eine Kratzspachtelung oder eine Grundierung und/oder eine andere übliche Beschichtung, aufweisen kann.

Mit dem Mischen der mehrkomponentigen Zusammensetzung beginnt die Aushärtungsreaktion. Die Epoxygruppen des Epoxidharzes und gegebenenfalls des Reaktivverdünners reagieren mit den reaktiven NH-Wasserstoffen unter Bildung der organischen Bindemittelmatrix, während das gegebenenfalls vorhandene hydraulische anorganische Bindemittel mit dem Wasser unter Hydratationsreaktionen die anorganische Bindemittelmatrix bildet, wodurch die Zusammensetzung schließlich aushärtet. Somit beschreibt die vorliegende Erfindung auch eine ausgehärtete Zusammensetzung bzw. Beschichtung.

Die Erfindung betrifft daher auch eine Beschichtung, Grundierung oder Versiegelung, insbesondere Bodenbeschichtung, Bodengrundierung oder Bodenversiegelung, erhältlich nach dem vorgehend beschriebenen Verfahren.

Die Erfindung betrifft eine Verwendung einer vorgehend beschriebenen mehrkomponentigen Zusammensetzung als Beschichtung, Grundierung oder Versiegelung, insbesondere Bodenbeschichtung, Bodengrundierung oder Bodenversiegelung.

### Beispiele

Folgende Handelsprodukte werden verwendet:
- Komponente A: EEW 240 g/Eq, SikaFloor 253 Komponente A, Sika Schweiz AG, 65 Gew.-% Epoxdidharze, 10 Gew.-% Reaktionsverdünner.
- Additive: Dispergiermittel und Entschäumungsmittel
- D.E.H. 804: wässriger Aminhärter, Polyamin-Polyepoxid-Addukt, Feststoffgehalt 70 Gew.%, Dow Chemical Company
- EPILINK 701: EPILINK 701, Polyamin-Polyepoxid-Addukt, AirProducts
- IPDA: Vestamin® IPD, 3-Aminomethyl-3,5,5-trimethyl-cyclohexylamin, Evonik
- Zement: Weißzement CEM I 52,5R, Valderrivas
- Quarzsand: 0,06-0,3mm

Es wurden dreikomponentige Zusammensetzungen gemäß nachstehenden Tabellen 1a und 1b formuliert. In den Tabellen 2a und 2b sind Eigenschaften der Zusammensetzungen **Ex1-Ex9** (erfindungsgemässe Zusammensetzungen) und **Ref1-Ref11** (Vergleichsbeispiele) aufgeführt. Bei dem Zusammensetzung **Ref11** handelt es sich um eine Zusammensetzung, wie sie in WO2009150212 auf der Seite 42 als Beispiel 30 beschrieben ist.

### Herstellung von "Bsp.10":

Der Rohstoff "Bsp. 10" enthaltend die Verbindung **VB** wurde hergestellt wie in WO2009150212 auf den Seiten 39 bis 40 für Herstellung von Beispiel 10 beschrieben, mit der Ausnahme, dass weniger Wasser für die Herstellung verwendet wurde. Der Wassergehalt des finalen Produktes betrug 20 Gew.-% anstelle der in der WO2009150212 auf Seite 40 in Tabelle 2 ausgewiesenen 50 Gew.-%. Der im vorliegenden Dokument eingesetzte Rohstoff "Bsp. 10" enthält daher 20 Gew.-% Wasser, 32 Gew.-% der Verbindung **VB,** 36 Gew.-% Polyamin-Polyepoxid-Addukt **AD** sowie 12 Gew.-% Polyamin **A4** (IPDA).

### Herstellung der Komponente B:

Das Wasser wird in einem geeigneten Gefäß vorgelegt und die weiteren Rohstoffe unter Rühren mit einem Dissolver zugegeben.

### Herstellung der gemischten Zusammensetzungen:

Die Komponenten A und B werden im angegebenen Mischungsverhältnis mit einem Flügelrührer gemischt und nach guter Durchmischung (ca. 1-2 Minuten) wird die Komponente C kontinuierlich zugegeben und für weitere ca. 3 Minuten gemischt.

Die gemischten Zusammensetzungen **Ex1-Ex9** und **Ref1-Ref11** wurden folgendermassen geprüft:

### Glanzmessung

Glanz wurde nach EN ISO 2813 gemessen bei einem Einfallswinkel von 85°. Alle Proben wiesen eine Filmdicke von 2 mm auf nach dem Härten bei 23°C und 50% relativer Luftfeuchtigkeit für 24 h. Die Ergebnisse der Glanzmessungen sind in Tabelle 2a dargestellt.

### Verarbeitbarkeit

Die Verarbeitbarkeit wird durch den Verarbeiter während der Applikation bestimmt. Hierbei ist entscheidend mit welchem Widerstand sich die Beschichtung verteilen lässt. Ziel der Applikation ist eine 2 mm dicke Schicht mit angemessenem Kraftaufwand und in angemessener Zeit mit einer Zahnrakel aufbringen zu können. Als Referenz dienen die auf dem Markt befindlichen selbstverlaufenden Beschichtungssysteme und deren Applikationseigenschaften.

### Verlauf

Der Verlauf wird durch visuelle Beurteilung einer mit einer Zahnrakel verarbeiteten selbstverlaufenden Beschichtung ermittelt. Dabei wird die Beschichtung bei 23°C gleichmäßig als 2 mm dicke Schicht aufgebracht. Anschließend wird mit der Zahnrakel das Material an einer Stelle auf eine Dicke von 10 mm aufgehäuft. Nach dem Aushärten werden eventuell zurückbleibende Spuren dieses Versuches beurteilt. Die Ergebnisse der Verlaufsmessungen sind in Tabelle 2a dargestellt.

### Optik

Beurteilt wird das allgemeine Erscheinungsbild der nach oben beschriebenen Verfahren aufgebrachten selbstverlaufenden Beschichtung (Zahnrakel, 2 mm dicke Schicht, 23°C). Wichtige Aspekte sind wie gleichmäßig die Oberfläche ausgehärtet ist. Berücksichtigte nachteilige Oberflächendefekte sind Flecken, Narbigkeit der Oberfläche, zurückbleibende Wellen und das daraus resultierende unruhige Aussehen der Oberfläche, sowie Nadelstiche. Als Nadelstiche werden in der Oberfläche zurückbleibende kleine Löcher bezeichnet."

Das Gewichtsverhältnis von Aminverbindung **PA** zu Verbindung **VB** ist als PA/VB ausgewiesen. Der Anteil der organische Anteile **OA,** bezogen auf das Gesamtgewicht der mehrkomponentigen Zusammensetzung enthält, wird als "Anteil OA" in Gew.-% angegeben.

Die enthaltene Menge an Wasser oder Zement ist als Gew.-%, bezogen auf das Gesamtgewicht der mehrkomponentige Zusammensetzung, angegeben. Das Gewichtsverhältnis von Wasser zu Zement wird als W/Z ausgeweisen. Die Epoxidfunktionalität, respektive die Aminfunktionalität der mehrkomponentige Zusammensetzung wird als EP-Eq, respektive als NH-Eq in[g/eq] aufgeführt. Das stöchiometrische Verhältnis von Epoxidfunktionalität zu Aminfunktionalität ist in % als "StöchVerh" ausgewiesen. Das Gewichtsverhältnis von organischen Anteilen OA zu der Gesamtmenge an Wasser wird als "OA/W" angegeben. Das Gewichtsverhältnis von der festen Komponente (C) zu der Binderkomponente (A) wird als C/A angegeben.

**Tabelle 1a**

| Rohstoff | **Ex1** | **Ex2** | **Ex3** | **Ex4** | **Ex5** | **Ex6** | **Ex7** | **Ex8** | **Ex9** | **Ref1** |
|---|---|---|---|---|---|---|---|---|---|---|
| A:B:C | 63:37:120 | 74:26:120 | 69:31:120 | 68:32:120 | 68:32:120 | 71:29:120 | 68:32:120 | 69:31:120 | 60:40:120 | 84:16:120 |
| **Komponente A** | 63 | 74 | 69 | 68 | 68 | 71 | 68 | 69 | 60 | 84 |
| *Gew.-% A* | *28.6* | *33.6* | *31.4* | *30.9* | *30.9* | *32.3* | *30.9* | *31.4* | *27.3* | *38.2* |
| **Komponente B** | | | | | | | | | | |
| IPDA | 9.6 | 11.3 | 10.8 | 9.2 | 10.4 | 10.8 | 9.2 | 10.8 | 9.2 | 14.3 |
| Bsp.10 | 3.9 | 4.6 | 2.2 | 7.5 | 4.3 | 4.4 | 7.5 | 2.2 | 3.6 | - |
| D.E.H.® 804 | | | | | | | | | | |
| EPILINK 701® | | | | | | | | | | |
| Wasser | 22.3 | 8.7 | 16.7 | 14.2 | 16.1 | 12.5 | 14.2 | 16.7 | 26 | - |
| Additive | 1.2 | 1.4 | 1.3 | 1.1 | 1.2 | 1.3 | 1.1 | 1.3 | 1.2 | 1.7 |
| Summe B | 37 | 26 | 31 | 32 | 32 | 29 | 32 | 31 | 40 | 16 |
| *Gew.-% B* | *16.8* | *11.8* | *14.1* | *14.5* | *14.5* | *13.2* | *14.5* | *14.1* | *18.2* | 7.3 |
| **Komponente C** | | | | | | | | | | |
| Quarzsand | 120 | 120 | 120 | 120 | 75.6 | 75.6 | 75.6 | 75.6 | 75.6 | 120 |
| Zement | | | | | 44.4 | 44.4 | 44.4 | 44.4 | 44.4 | |
| Summe C | 120 | 120 | 120 | 120 | 120 | 120 | 120 | 120 | 120 | 120 |
| *Gew.-% C* | *54.5* | *54.5* | *54.5* | *54.5* | *54.5* | *54.5* | *54.5* | *54.5* | *54.5* | *54.5* |
| Summe Gew.-Teile | 220 | 220 | 220 | 220 | 220 | 220 | 220 | 220 | 220 | 220 |

**Tabelle 1b, *Komponente A von Ref11 wie in WO2009150212 auf der Seite 42 als Beispiel 30 beschrieben**

| Rohstoff | **Ref2** | **Ref3** | **Ref4** | **Ref5** | **Ref7** | **Ref8** | **Ref9** | **Ref10** | **Ref11** |
|---|---|---|---|---|---|---|---|---|---|
| A:B:C | 68:32:120 | 84:16:120 | 46:54:120 | 68:32:180 | 60:40:120 | 59:41:120 | 59:41:120 | 59:41:120 | |
| **Komponente A** | 68 | 84 | 46 | 68 | 60 | 59 | 59 | 59 | 10* |
| *Gew.-% A* | *30.9* | *38.2* | *20.9* | 24.3 | 27.3 | *26.8* | *26.8* | *26.8* | 5.4 |

| **Komponente B** | | | | | | | | | |
|---|---|---|---|---|---|---|---|---|---|
| IPDA | 12 | 14.3 | 7 | 10.4 | 9.2 | 9 | 9.9 | 9 | |
| Bsp.10 | - | - | 2.9 | 4.3 | | | | | 7.2 |
| D.E.H.® 804 | | | | | 3.6 | 5.3 | | | |
| EPILINK 701® | | | | | | | 1.9 | 5.3 | |
| Wasser | 18.6 | - | 43.3 | 16.1 | 26 | 25.5 | 27.9 | 25.5 | 17.6 |
| Additive | 1.4 | 1.7 | 0.8 | 1.2 | 1.2 | 1.2 | 1.3 | 1.2 | 0.2 |
| Summe B | 32 | 16 | 54 | 32 | 40 | 41 | 41 | 41 | 25 |
| *Gew.-% B* | *14.5* | 7.3 | 24.5 | *11.4* | *18.2* | *18.6* | *18.6* | *18.6* | *13.5* |

| **Komponente C** | | | | | | | | | |
|---|---|---|---|---|---|---|---|---|---|
| Quarzsand | 120 | 75.6 | 75.6 | 113.4 | 75.6 | 75.6 | 75.6 | 75.6 | 94.5 |
| Zement | | 44.4 | 44.4 | 66.6 | 44.4 | 44.4 | 44.4 | 44.4 | 55.5 |
| Summe C | 120 | 120 | 120 | 180 | 120 | 120 | 120 | 120 | 150 |
| *Gew.-% C* | 54.5 | 54.5 | 54.5 | 64.3 | 54.5 | 54.5 | 54.5 | 54.5 | *81.1* |
| Summe Gew.-Teile | 220 | 220 | 220 | 280 | 220 | 220 | 220 | 220 | 185 |

**Tabelle 2a, n.m. = nicht messbar**

| | Optik | Verarbeitbarkeit | Verlauf | Glanz | Bemerkung | PA/VB | Anteil OA |
|---|---|---|---|---|---|---|---|
| | | | | | | | [Gew.-%] |
| Ex1 | ++ | ++ | ++ | 97 | | 8.7 | 26 |
| Ex2 | ++ | ++ | ++ | 101 | | 8.7 | 31 |
| Ex3 | ++ | ++ | ++ | 91 | | 15.9 | 28 |
| Ex4 | + | + | + | 101 | viele Nadelstiche | 5.0 | 29 |
| Ex5 | + | +++ | ++ | 96 | | 8.7 | 29 |
| Ex6 | + | +++ | ++ | 102 | einige Nadelstiche | 8.7 | 30 |
| Ex7 | + | ++ | + | 100 | viele Nadelstiche | 5.0 | 29 |
| Ex8 | - | ++ | ++ | 103 | | 15.9 | 28 |
| Ex9 | + | + | + | 87 | einige Nadelstiche | 9.1 | 25 |
| Ref1 | ++ | ++ | ++ | 104 | | - | 34 |
| Ref2 | - | ++ | - | 90 | | - | 28 |
| Ref3 | - | +++ | - | 106 | | - | 34 |
| Ref4 | - | - | - | n.m. | | 8.7 | 19 |
| Ref5 | - | - | - | 78 | | 8.7 | 22 |
| Ref7 | - | ++ | - | 24 | narbige Oberfläche, Sand nicht abgesunken. | - | 25 |
| Ref8 | - | ++ | - | 37 | narbige Oberfläche, Sand nicht abgesunken. | - | 25 |
| Ref9 | - | ++ | - | 37 | narbige Oberfläche, Sand nicht abgesunken. | - | 24 |
| Ref10 | - | ++ | - | 31 | narbige Oberfläche, Sand nicht abgesunken. | - | 25 |
| Ref11 | - | ++ | + | <10 | | 1.4 | |

**Tabelle 2b**

| | Zement | Wasser | W/Z, | EP-Eq | NH-Eq | StöchVerh | C/A | OA/W |
|---|---|---|---|---|---|---|---|---|
| | [Gew.-%] | [Gew.-%] | | [q/eq] | [q/eq] | [%] | | |
| Ex1 | | 10.5 | | 837.9 | 876 | 95.7 | 1.9 | 2.5 |
| Ex2 | | 4.4 | | 713.4 | 746.6 | 95.6 | 1.6 | 7.1 |
| Ex3 | | 7.8 | | 765.1 | 823.5 | 92.9 | 1.7 | 3.6 |
| Ex4 | | 7.2 | | 776.3 | 838.3 | 92.6 | 1.8 | 4.1 |
| Ex5 | 20.2 | 7.7 | 0,38 | 776.3 | 812.6 | 95.5 | 1.8 | 3.8 |
| Ex6 | 20.2 | 6.1 | 0,30 | 743.5 | 784.6 | 94.8 | 1.7 | 4.9 |
| Ex7 | 20.2 | 7.2 | 0,35 | 776.3 | 838.3 | 92.6 | 1.8 | 4.1 |
| Ex8 | 20.2 | 7.8 | | 765.1 | 823.5 | 92.9 | 1.7 | 3.6 |
| Ex9 | 20.2 | 12.1 | 0,60 | 879.8 | 923.4 | 95.3 | 2.0 | 2.1 |
| Ref1 | | | | 628.5 | 655.1 | 95.9 | 1.4 | |
| Ref2 | | 8.5 | | 776.3 | 781.3 | 99.4 | 1.8 | 3.3 |
| Ref3 | 20.2 | | | 628.5 | 655.1 | 95.9 | 1.4 | |
| Ref4 | 20.2 | 19.9 | 0,99 | 1'147.60 | 1'202.20 | 95.5 | 2.6 | 1.0 |
| Ref5 | 23.8 | 6.1 | 0,25 | 988.1 | 1'034.20 | 95.5 | 2.6 | 3.6 |
| Ref7 | 20.2 | 12.4 | 0,61 | 879.8 | 947.5 | 92.9 | 2.0 | 2.0 |
| Ref8 | 20.2 | 12.4 | 0,62 | 894.8 | 933.1 | 95.9 | 2.0 | 2.0 |
| Ref9 | 20.2 | 13.1 | 0,65 | 894.8 | 924.1 | 96.8 | 2.0 | 1.8 |
| Ref10 | 20.2 | 12.7 | 0,63 | 894.8 | 959 | 93.3 | 2.0 | 2.0 |
| Ref11 | 30.0 | 11.5 | 0,38 | | | | 15 | |

## Patentansprüche

1. Mehrkomponentige Zusammensetzung, umfassend
A) eine Binderkomponente (A) umfassend mindestens ein Epoxidharz,
B) eine Härterkomponente (B) umfassend mindestens eine Aminverbindung **PA,** und
C) eine feste Komponente (C) umfassend mindestens einen anorganischen Füllstoff,
**dadurch gekennzeichnet, dass**
- die mehrkomponentige Zusammensetzung 3 - 15 Gew.-% Wasser, bezogen auf das Gesamtgewicht der mehrkomponentigen Zusammensetzung, enthält,
- und dass die mehrkomponentige Zusammensetzung weiter eine Verbindung **VB** der Formel (I) oder (II) 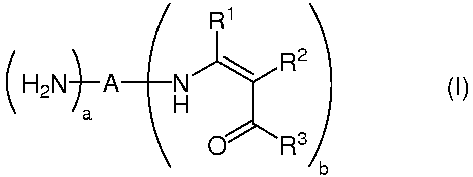 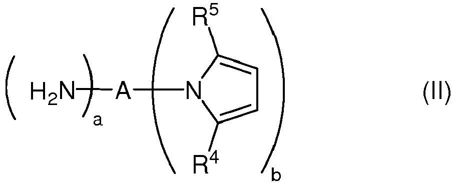 enthält, wobei
entweder
R¹ und R³ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen, und
R² für ein Wasserstoffatom oder für eine Alkyl-, Cycloalkyl-, Aryl- oder Arylalkylgruppe mit 1 bis 12 C-Atomen steht,
oder
R² und R¹ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R³ für eine Alkyl-, Cycloalkyl-, Aryl- oder Arylalkylgruppe mit 1 bis 12 C-Atomen, welche gegebenenfalls Ethergruppen oder Halogenatome aufweist, steht;
oder
R² und R³ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R¹ für eine Alkyl-, Cycloalkyl-, Aryl- oder Arylalkylgruppe mit 1 bis 12 C-Atomen, welche gegebenenfalls Ethergruppen oder Halogenatome aufweist, steht;
R⁴ und R⁵ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen;
A für einen (a+b)-wertigen Rest eines Polyamin-Polyepoxid-Addukts nach Entfernung von (a+b) primären Aminogruppen steht;
a für eine ganze Zahl von 0 bis 4 steht; und
b für eine ganze Zahl von 1 bis 4 steht;
mit den Massgaben, dass die Summe von a und b für eine ganze Zahl von 1 bis 4 steht, und dass das dem Polyamin-Polyepoxid-Addukt zugrunde liegende Polyepoxid ein Polyepoxid **E,** insbesondere ein Diepoxid **E1,** ist, und ein Epoxy-Equivalent-Gewicht (EEW) von 65 bis 500 g/Eq aufweist,
- und wobei das Gewichtsverhältnis von Aminverbindung **PA** zu Verbindung **VB** von 4 - 20 beträgt,
- und wobei der Gewichtsanteil der festen Komponente (C) 25 - 62 Gew.-%, bezogen auf das Gesamtgewicht der mehrkomponentigen Zusammensetzung, beträgt.

2. Mehrkomponentige Zusammensetzung nach Anspruch 1, **dadurch gekennzeichnet, dass** die mindestens eine Aminverbindung **PA** ausgewählt ist aus der Gruppe bestehend aus Polyamin **A4,** Polyaminoamid, Polyamin-Polyepoxid-Addukt **AD** und Polyaminoamid-Polyepoxid-Addukt oder eine Mischung von mindestens zwei dieser Verbindungen ist.

3. Mehrkomponentige Zusammensetzung nach einem der vorgehenden Ansprüche, **dadurch gekennzeichnet, dass** die mindestens eine Aminverbindung **PA** ein Polyamin **A4** oder eine Mischung aus Polyamin **A4** und Polyamin-Polyepoxid-Addukt **AD** ist,
vorzugsweise ist das Polyamin **A4** ausgewählt ist aus der Gruppe bestehend aus Isophorondiamin (IPDA), Bis-(4-aminocyclohexyl)-methan (H12-MDA), Bis-(4-amino-3-methylcyclohexyl)-methan, 2,2,4- und 2,4,4-Trimethylhexamethylendiamin (TMD), 1,3-Xylylendiamin (meta-Xylylendiamin oder MXDA) und 2-Butyl-2-ethyl-1,5-pentandiamin (C11-Neodiamin), und vorzugsweise ist das Polyamin-Polyepoxid-Addukt **AD** ein Addukt aus mindestens einem Polyamin **A3** mit mindestens zwei Aminogruppen in Form von primären oder sekundären Aminogruppen und mindestens einem Polyepoxid **E** mit einem Epoxy-Equivalent-Gewicht (EEW) von 65 bis 500 g/Eq, wobei das Addukt terminale primäre und/oder sekundäre Aminogruppen aufweist, und wobei das Polyamin **A3** ausgewählt ist aus der Gruppe bestehend aus einerseits Polyoxyalkylen-Diaminen mit einem Molekulargewicht von höchstens 1000 g/mol, und andererseits Isophorondiamin (IPDA), 2,2,4- und 2,4,4-Trimethylhexamethylendiamin (TMD), 1,3-Xylylendiamin (meta-Xylylendiamin oder MXDA), 2-Butyl-2-ethyl-1,5-pentandiamin (C11-Neodiamin), N-Ethyl-1,3-propandiamin und N-Cyclohexyl-1,3-propandiamin.

4. Mehrkomponentige Zusammensetzung nach einem der Ansprüche 2 oder 3, **dadurch gekennzeichnet, dass** das Gewichtsverhältnis von Polyamin **A4** zu Polyamin-Polyepoxid-Addukt **AD** von 5 - 50, insbesondere 10 - 45, bevorzugt 15 - 25, beträgt.

5. Mehrkomponentige Zusammensetzung nach einem der vorgehenden Ansprüche, **dadurch gekennzeichnet, dass** die mehrkomponentige Zusammensetzung 4 - 12 Gew.-%, insbesondere 5 - 10 Gew.-%, bevorzugt 6 - 9 Gew.-% Wasser, bezogen auf das Gesamtgewicht der mehrkomponentigen Zusammensetzung, enthält.

6. Mehrkomponentige Zusammensetzung nach einem der vorgehenden Ansprüche, **dadurch gekennzeichnet, dass** das Gewichtsverhältnis von Aminverbindung **PA** zu Verbindung **VB** von 6 - 16, insbesondere 6 - 15, bevorzugt 7 - 10, beträgt.

7. Mehrkomponentige Zusammensetzung nach einem der vorgehenden Ansprüche, **dadurch gekennzeichnet, dass** die mehrkomponentige Zusammensetzung, bezogen auf das Gesamtgewicht der mehrkomponentigen Zusammensetzung, 25 - 40 Gew.-%, insbesondere 25 - 35 Gew.-%, an Binderkomponente (A) enthält.

8. Mehrkomponentige Zusammensetzung nach einem der vorgehenden Ansprüche, **dadurch gekennzeichnet, dass** der Gewichtsanteil der festen Komponente (C) 30 - 60 Gew.-%, insbesondere 40 - 57.5 Gew.-%, vorzugsweise 45 - 55 Gew.-%, bezogen auf das Gesamtgewicht der mehrkomponentigen Zusammensetzung, beträgt.

9. Mehrkomponentige Zusammensetzung nach einem der vorgehenden Ansprüche, **dadurch gekennzeichnet, dass** das stöchiometrische Verhältnis von Epoxidfunktionalität zu Aminfunktionalität von 80% - 120%, insbesondere 90% - 110%, beträgt.

10. Mehrkomponentige Zusammensetzung nach einem der vorgehenden Ansprüche, **dadurch gekennzeichnet, dass** das Gewichtsverhältnis von der festen Komponente (C) zu der Binderkomponente (A) von 1.5 - 2.3, insbesondere 1.6 - 2.0, beträgt.

11. Mehrkomponentige Zusammensetzung nach einem der vorgehenden Ansprüche, **dadurch gekennzeichnet, dass** die mehrkomponentige Zusammensetzung 5 - 62 Gew.-%, 5 - 50 Gew.-%, 5 - 30 Gew.-%, 8 - 25 Gew.-%, 12 - 22.5 Gew.-%, 18 - 22 Gew.-%, eines hydraulischen anorganischen Bindemittels, vorzugsweise Zement, bezogen auf das Gesamtgewicht der mehrkomponentigen Zusammensetzung, enthält.

12. Mehrkomponentige Zusammensetzung nach einem der Ansprüche 1 bis 10, **dadurch gekennzeichnet, dass** die mehrkomponentige Zusammensetzung 0 - 5 Gew.-%, 0 - 2 Gew.-%, 0 - 1 Gew.-%, 0 - 0.5 Gew.-%, insbesondere 0 - 0.1 Gew.-%, eines hydraulischen anorganischen Bindemittels, vorzugsweise Zement, bezogen auf das Gesamtgewicht der mehrkomponentigen Zusammensetzung, enthält.

13. Verfahren zur Herstellung einer Beschichtung, Grundierung oder Versiegelung, vorzugsweise einer Bodenbeschichtung, Bodengrundierung oder Bodenversiegelung, mit einer mehrkomponentigen Zusammensetzung nach irgendeinem der Ansprüche 1 bis 12, wobei das Verfahren folgende Verfahrensschritte umfasst
a) Mischen der Binderkomponente (A) und der Härterkomponente (B),
b) Zugabe der festen Komponente (C) und gegebenenfalls ein hydraulisches anorganisches Bindemittel sowie gegebenenfalls Zugabe von Wasser und Verbindung **VB,** falls Wasser und Verbindung **VB** nicht bereits in der Binderkomponente (A) oder der Härterkomponente (B) enthalten waren, zu der in Schritt a) erhaltenen Mischung unter Rühren, um eine gemischte Zusammensetzung zu erhalten,
c) Aufbringen der erhaltenen gemischten Zusammensetzung auf ein Substrat,
d) gegebenenfalls Glätten oder Entlüften der aufgebrachten gemischten Zusammensetzung und
e) Aushärten der aufgebrachten gemischten Zusammensetzung, um die Beschichtung, Grundierung oder Versiegelung zu erhalten.

14. Beschichtung, Grundierung oder Versiegelung, insbesondere Bodenbeschichtung, Bodengrundierung oder Bodenversiegelung, erhältlich nach einem Verfahren nach Anspruch 13.

15. Verwendung einer mehrkomponentigen Zusammensetzung nach irgendeinem der Ansprüche 1 bis 12 als Beschichtung, Grundierung oder Versiegelung, insbesondere Bodenbeschichtung, Bodengrundierung oder Bodenversiegelung.

## Claims

1. Multicomponent composition comprising
A) a binder component (A) comprising at least one epoxy resin,
B) a curing component (B) comprising at least one amine compound **PA,** and
C) a solid component (C) comprising at least one inorganic filler,
**characterized in that**
- the multicomponent composition contains 3-15% by weight of water, based on the total weight of the multicomponent composition,
- and **in that** the multicomponent composition further comprises a compound **VB** of the formula (I) or (II) 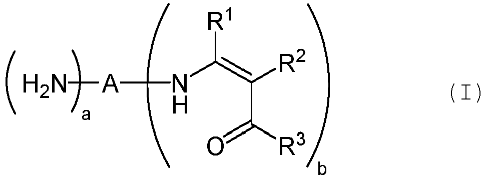 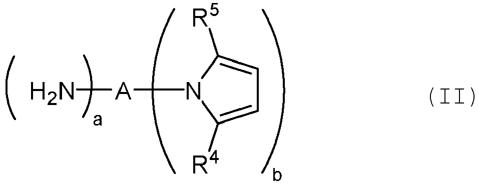 where
either
R¹ and R³ are each independently an alkyl, cycloalkyl, aryl or arylalkyl group which has 1 to 12 carbon atoms and optionally has ether groups or halogen atoms, and
R² is a hydrogen atom or an alkyl, cycloalkyl, aryl or arylalkyl group having 1 to 12 carbon atoms,
or
R² and R¹ together are a divalent hydrocarbyl radical which is part of an optionally substituted carbocyclic ring having 5 to 8, preferably 5 or 6, carbon atoms and R³ is an alkyl, cycloalkyl, aryl or arylalkyl group which has 1 to 12 carbon atoms and optionally has ether groups or halogen atoms;
or
R² and R³ together are a divalent hydrocarbyl radical which is part of an optionally substituted carbocyclic ring having 5 to 8, preferably 5 or 6, carbon atoms and R¹ is an alkyl, cycloalkyl, aryl or arylalkyl group which has 1 to 12 carbon atoms and optionally has ether groups or halogen atoms;
R⁴ and R⁵ are each independently an alkyl, cycloalkyl, aryl or arylalkyl group which has 1 to 12 carbon atoms and optionally has ether groups or halogen atoms;
A is an (a+b)-valent radical of a polyamine-polyepoxide adduct after removal of (a+b) primary amino groups;
a is an integer from 0 to 4; and
b is an integer from 1 to 4;
with the provisos that the sum total of a and b is an integer from 1 to 4, and that the parent polyepoxide of the polyamine-polyepoxide adduct is a polyepoxide **E,** especially a diepoxide **E1,** and has an epoxy equivalent weight (EEW) of 65 to 500 g/eq,
- and where the weight ratio of amine compound **PA** to compound **VB** is 4-20,
- and where the proportion by weight of the solid component (C) is 25-62% by weight, based on the total weight of the multicomponent composition.

2. Multicomponent composition according to Claim 1, **characterized in that** the at least one amine compound **PA** is selected from the group consisting of polyamine **A4,** polyaminoamide, polyamine-polyepoxide adduct **AD** and polyaminoamide-polyepoxide adduct or a mixture of at least two of these compounds.

3. Multicomponent composition according to either of the preceding claims, **characterized in that** the at least one amine compound **PA** is a polyamine **A4** or a mixture of polyamine **A4** and polyamine-polyepoxide adduct **AD,** the polyamine **A4** is preferably selected from the group consisting of isophoronediamine (IPDA), bis(4-aminocyclohexyl)methane (H12-MDA), bis(4-amino-3-methylcyclohexyl)methane, 2,2,4- and 2,4,4-trimethylhexamethylenediamine (TMD), xylylene-1,3-diamine (meta-xylylenediamine or MXDA) and 2-butyl-2-ethylpentane-1,5-diamine (C11 neodiamine), and the polyamine-polyepoxide adduct **AD** is preferably an adduct of at least one polyamine **A3** having at least two amino groups in the form of primary or secondary amino groups and at least one polyepoxide **E** having an epoxy equivalent weight (EEW) of 65 to 500 g/eq, where the adduct has terminal primary and/or secondary amino groups, and where the polyamine **A3** is selected from the group consisting of firstly polyoxyalkylenediamines having a molecular weight of not more than 1000 g/mol, and secondly isophoronediamine (IPDA), 2,2,4- and 2,4,4-trimethylhexamethylenediamine (TMD), xylylene-1,3-diamine (meta-xylylenediamine or MXDA), 2-butyl-2-ethylpentane-1,5-diamine (C11 neodiamine), N-ethylpropane-1,3-diamine and N-cyclohexylpropane-1,3-diamine.

4. Multicomponent composition according to either of Claims 2 and 3, **characterized in that** the weight ratio of polyamine **A4** to polyamine-polyepoxide adduct **AD** is 5-50, especially 10-45, preferably 15-25.

5. Multicomponent composition according to any of the preceding claims, **characterized in that** the multicomponent composition contains 4-12% by weight, especially 5-10% by weight, preferably 6-9% by weight, of water, based on the total weight of the multicomponent composition.

6. Multicomponent composition according to any of the preceding claims, **characterized in that** the weight ratio of amine compound **PA** to compound **VB** is 6-16, especially 6-15, preferably 7-10.

7. Multicomponent composition according to any of the preceding claims, **characterized in that** the multicomponent composition, based on the total weight of the multicomponent composition, contains 25-40% by weight, especially 25-35% by weight, of binder component (A) .

8. Multicomponent composition according to any of the preceding claims, **characterized in that** the proportion by weight of the solid component (C) is 30-60% by weight, especially 40-57.5% by weight, preferably 45-55% by weight, based on the total weight of the multicomponent composition.

9. Multicomponent composition according to any of the preceding claims, **characterized in that** the stoichiometric ratio of epoxy functionality to amine functionality is 80%-120%, especially 90%-110%.

10. Multicomponent composition according to any of the preceding claims, **characterized in that** the weight ratio of the solid component (C) to the binder component (A) is 1.5-2.3, especially 1.6-2.0.

11. Multicomponent composition according to any of the preceding claims, **characterized in that** the multicomponent composition contains 5-62% by weight, 5-50% by weight, 5-30% by weight, 8-25% by weight, 12-22.5% by weight, 18-22% by weight, of a hydraulic inorganic binder, preferably cement, based on the total weight of the multicomponent composition.

12. Multicomponent composition according to any of Claims 1 to 10, **characterized in that** the multicomponent composition contains 0-5% by weight, 0-2% by weight, 0-1% by weight, 0-0.5% by weight, especially 0-0.1% by weight, of a hydraulic inorganic binder, preferably cement, based on the total weight of the multicomponent composition.

13. Method of producing a coating, primer coat or seal, preferably a floor coating, floor primer coat or floor seal, with a multicomponent composition according to any of Claims 1 to 12, wherein the method comprises the following method steps:
a) mixing the binder component (A) and the curing component (B),
b) adding the solid component (C) and optionally a hydraulic inorganic binder, and optionally adding water and compound **VB,** if water and compound **VB** were not already present in the binder component (A) or the curing component (B), to the mixture obtained in step a) while stirring in order to obtain a mixed composition,
c) applying the mixed composition obtained to a substrate,
d) optionally smoothing or deaerating the mixed composition applied and
e) curing the mixed composition applied in order to obtain the coating, primer coat or seal.

14. Coating, primer coat or seal, especially floor coating, floor primer coat or floor seal, obtainable by a method according to Claim 13.

15. Use of a multicomponent composition according to any of Claims 1 to 12 as coating, primer coat or seal, especially floor coating, floor primer coat or floor seal.

## Revendications

1. Composition à plusieurs composants, comprenant
A) un composant de type liant (A) comprenant au moins une résine époxyde,
B) un composant de type durcisseur (B) comprenant au moins un composé de type amine **PA,** et
C) un composant solide (C) comprenant au moins une charge inorganique,
**caractérisée en ce que**
- la composition à plusieurs composants contient 3 à 15 % en poids d'eau, par rapport au poids total de la composition à plusieurs composants,
- et **en ce que** la composition à plusieurs composants contient en outre un composé **VB** de formule (I) ou (II) 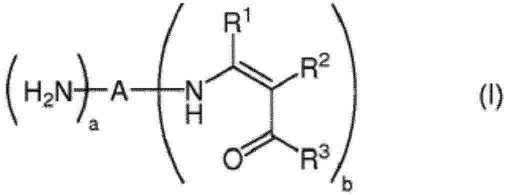 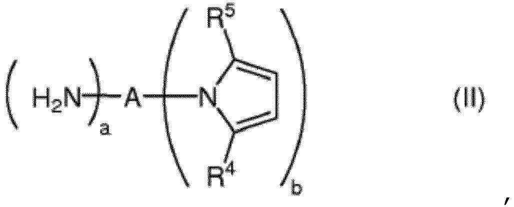 dans lesquelles
soit
R¹ et R³ représentent indépendamment l'un de l'autre à chaque fois un groupe alkyle, cycloalkyle, aryle ou arylalkyle comportant 1 à 12 atomes de C, qui présente éventuellement des groupes éther ou des atomes d'halogène, et
R² représente un atome d'hydrogène ou un groupe alkyle, cycloalkyle, aryle ou arylalkyle comportant 1 à 12 atomes de C,
soit
R² et R¹ représentent ensemble un radical hydrocarboné divalent qui fait partie d'un cycle carbocyclique éventuellement substitué comportant 5 à 8, préférablement 5 ou 6 atomes de C, et R³ représente un groupe alkyle, cycloalkyle, aryle ou arylalkyle comportant 1 à 12 atomes de C, qui présente éventuellement des groupes éther ou des atomes d'halogène ;
soit
R² et R¹ représentent ensemble un radical hydrocarboné divalent qui fait partie d'un cycle carbocyclique éventuellement substitué comportant 5 à 8, préférablement 5 ou 6 atomes de C, et R¹ représente un groupe alkyle, cycloalkyle, aryle ou arylalkyle comportant 1 à 12 atomes de C, qui présente éventuellement des groupes éther ou des atomes d'halogène ;
R⁴ et R⁵ représentent, indépendamment l'un de l'autre, respectivement un groupe alkyle, cycloalkyle, aryle ou arylalkyle comportant 1 à 12 atomes de C, qui présente éventuellement des groupes éther ou des atomes d'halogène ;
A représente un radical (a + b)-valent d'un adduit de type polyamine-polyépoxyde après élimination de (a + b) groupes amino primaire ;
a représente un nombre entier de 0 à 4 ; et
b représente un nombre entier de 1 à 4 ;
avec les conditions que la somme de a et b représente un nombre entier de 1 à 4, et que le polyépoxyde à la base de l'adduit de type polyamine-polyépoxyde est un polyépoxyde **E,** en particulier un diépoxyde **E1,** et présente un poids d'équivalent époxy (PEE) de 65 à 500 g/éq.,
- et le rapport pondéral du composé de type amine **PA** sur le composé **VB** étant de 4 à 20,
- et la proportion en poids du composant solide (C) étant de 25 à 62 % en poids, par rapport au poids total de la composition à plusieurs composants.

2. Composition à plusieurs composants selon la revendication 1, **caractérisée en ce que** l'au moins un composé de type amine **PA** est choisi dans le groupe constitué par une polyamine **A4,** un polyaminoamide, un adduit de type polyamine-polyépoxyde **AD** et un adduit de type polyaminoamide-polyépoxyde ou un mélange d'au moins deux de ces composés.

3. Composition à plusieurs composants selon l'une quelconque des revendications précédentes, **caractérisée en ce que** l'au moins un composé de type amine **PA** est une polyamine **A4** ou un mélange de polyamine **A4** et d'adduit de type polyamine-polyépoxyde **AD,**
de préférence la polyamine **A4** est choisie dans le groupe constitué par l'isophoronediamine (IPDA), le bis-(4-aminocyclohexyl)-méthane (H12-MDA), le bis-(4-amino-3-méthylcyclohexyl)-méthane, la 2,2,4-triméthylhexaméthylènediamine et la 2,4,4-triméthylhexaméthylènediamine (TMD), la 1,3-xylylènediamine (méta-xylylènediamine ou MXDA) et la 2-butyl-2-éthyl-1,5-pentanediamine (C11-néodiamine), et de préférence l'adduit de type polyamine-polyépoxyde AD est un adduit d'au moins une polyamine **A3** comportant au moins deux groupes amino sous forme de groupes amino primaire ou secondaire et d'au moins un polyépoxyde **E** doté d'un poids d'équivalent époxy (PEE) de 65 à 500 g/éq., l'adduit présentant des groupes amino primaire et/ou secondaire terminaux, et la polyamine **A3** étant choisie dans le groupe constitué par d'une part des polyoxyalkylène-diamines comportant un poids moléculaire d'au plus 1 000 g/mole, et d'autre part l'isophoronediamine (IPDA), la 2,2,4-triméthylhexaméthylènediamine et la 2,4,4-triméthylhexaméthylènediamine (TMD), la 1,3-xylylènediamine (méta-xylylènediamine ou MXDA), la 2-butyl-2-éthyl-1,5-pentanediamine (C11-néodiamine), la N-éthyl-1,3-propanediamine et la N-cyclohexyl-1,3-propanediamine.

4. Composition à plusieurs composants selon l'une quelconque des revendications 2 et 3, **caractérisée en ce que** le rapport pondéral de la polyamine **A4** sur l'adduit de type polyamine-polyépoxyde **AD** est de 5 à 50, en particulier de 10 à 45, préférablement de 15 à 25.

5. Composition à plusieurs composants selon l'une quelconque des revendications précédentes, **caractérisée en ce que** la composition à plusieurs composants contient 4 à 12 % en poids, en particulier 5 à 10 % en poids, préférablement 6 à 9 % en poids d'eau, par rapport au poids total de la composition à plusieurs composants.

6. Composition à plusieurs composants selon l'une quelconque des revendications précédentes, **caractérisée en ce que** le rapport pondéral du composé de type amine **PA** sur le composé **VB** est de 6 à 16, en particulier de 6 à 15, préférablement de 7 à 10.

7. Composition à plusieurs composants selon l'une quelconque des revendications précédentes, **caractérisée en ce que** la composition à plusieurs composants, par rapport au poids total de la composition à plusieurs composants, contient 25 à 40 % en poids, en particulier 25 à 35 % en poids du composant de type liant (A).

8. Composition à plusieurs composants selon l'une quelconque des revendications précédentes, **caractérisée en ce que** la proportion en poids du composant solide (C) est de 30 à 60 % en poids, en particulier de 40 à 57,5 % en poids, de préférence de 45 à 55 % en poids par rapport au poids total de la composition à plusieurs composants.

9. Composition à plusieurs composants selon l'une quelconque des revendications précédentes, **caractérisée en ce que** le rapport stoechiométrique de la fonctionnalité d'époxyde sur la fonctionnalité d'amine est de 80 % à 120 %, en particulier de 90 % à 110 %.

10. Composition à plusieurs composants selon l'une quelconque des revendications précédentes, **caractérisée en ce que** le rapport pondéral du composant solide (C) sur le composant de type liant (A) est de 1,5 à 2,3, en particulier de 1,6 à 2,0.

11. Composition à plusieurs composants selon l'une quelconque des revendications précédentes, **caractérisée en ce que** la composition à plusieurs composants contient 5 à 62 % en poids, 5 à 50 % en poids, 5 à 30 % en poids, 8 à 25 % en poids, 12 à 22,5 % en poids, 18 à 22 % en poids, d'un liant inorganique hydraulique, de préférence de ciment, par rapport au poids total de la composition à plusieurs composants.

12. Composition à plusieurs composants selon l'une quelconque des revendications 1 à 10, **caractérisée en ce que** la composition à plusieurs composants contient 0 à 5 % en poids, 0 à 2 % en poids, 0 à 1 % en poids, 0 à 0,5 % en poids, en particulier 0 à 0,1 % en poids, d'un liant inorganique hydraulique, de préférence de ciment, par rapport au poids total de la composition à plusieurs composants.

13. Procédé pour la préparation d'un revêtement, d'un apprêt ou d'un scellement, de préférence d'un revêtement de sol, d'un apprêt de sol ou d'un scellement de sol, avec une composition à plusieurs composants selon l'une quelconque des revendications 1 à 12, le procédé comprenant les étapes de procédé suivantes
a) mélange du composant de type liant (A) et du composant de type durcisseur (B),
b) ajout du composant solide (C) et éventuellement d'un liant inorganique hydraulique ainsi qu'éventuellement ajout d'eau et du composé **VB,** dans le cas où l'eau et le composé **VB** n'étaient pas déjà contenus dans le composant de type liant (A) ou le composant de type durcisseur (B), au mélange obtenu dans l'étape a) sous agitation, afin d'obtenir une composition mélangée,
c) application de la composition mélangée obtenue sur un substrat,
d) éventuellement lissage ou désaération de la composition mélangée appliquée et
e) durcissement de la composition mélangée appliquée, afin d'obtenir le revêtement, l'apprêt ou le scellement.

14. Revêtement, apprêt ou scellement, en particulier revêtement de sol, apprêt de sol ou scellement de sol, pouvant être obtenu par un procédé selon la revendication 13.

15. Utilisation d'une composition à plusieurs composants selon l'une quelconque des revendications 1 à 12 en tant que revêtement, apprêt ou scellement, en particulier en tant que revêtement de sol, apprêt de sol ou scellement de sol.
